# EUROPÄISCHE PATENTSCHRIFT

(11) **EP 0 489 330 B1**
(45) Veröffentlichungstag und Bekanntmachung des Hinweises auf die Patenterteilung: **16.08.1995**
(21) Anmeldenummer: 91120094.7
(22) Anmeldetag: 26.11.1991
(51) Int. Cl.: C07F 9/50

(54) **Sulfonierte Tris(p-fluorphenyl)phosphane**
Sulphonated tris(p-fluorophenyl)phosphane
Tris(p-fluorophenyl)phosphane sulfoné

(30) Priorität: 06.12.1990 DE 9016585 U
(43) Veröffentlichungstag der Anmeldung: 10.06.1992
(73) Patentinhaber: HOECHST AKTIENGESELLSCHAFT, 65926 Frankfurt am Main (DE)
(72) Erfinder: Papadogianakis, Georgios, GR-70009 Pobia Kenurgiou, Kreta (GR); Fell, Bernhard, Prof. Dr., W-5100 Aachen (DE); Bahrmann, Helmut, Dr., W-4236 Hamminkeln (DE)

(56) Entgegenhaltungen:
- EP-A- 0 104 967

## Beschreibung

Die Erfindung betrifft neue sulfonierte Tris(p-fluorphenyl)phosphane. Sie bilden mit Metallen der VIII. Gruppe des Periodensystems der Elemente Komplexverbindungen, die als Katalysatoren Anwendung finden können.

Komplexverbindungen, die als Zentralatom ein Metall der VIII. Gruppe des Periodensystems der Elemente und als Liganden P(III)-verbindungen wie Trialkyl- oder Triarylphosphane enthalten, haben in jüngster Zeit zunehmend als Katalysatoren Bedeutung gewonnen. Als Beispiel sei die technisch in großem Umfang ausgeübte Reaktion von Olefinen mit Kohlenmonoxid und Wasserstoff zu Aldehyden (Hydroformylierung) genannt, die in Gegenwart eines Katalysatorsystems aus Rhodium und Triphenylphosphan durchgeführt wird. Entsprechend der Löslichkeit dieser Systeme in organischen Medien erfolgt die Umsetzung in homogener Phase. Gegenüber den ursprünglich verwendeten Kobaltkatalysatoren gelingt es mit Rhodiumkatalysatoren, die Reaktion bei milderen Temperaturen und Drücken durchzuführen. Überdies erhält man in hoher Ausbeute und sehr selektiv lineare Aldehyde. In diesem Zusammenhang zeigte sich, daß bei Einsatz aromatischer Phosphane das Verhältnis n-Aldehyd zu i-Aldehyd größer ist als bei Einsatz aliphatischer Phosphane. Man erklärt dieses unterschiedliche Verhalten damit, daß die Basizität der aromatischen Verbindungen geringer ist als die der aliphatischen.

Statt in homogener Phase kann man die Umsetzung auch in heterogener Phase durchführen. Diese Verfahrensvariante ist besonders zweckmäßig, weil sie einen Weg eröffnet, den in Wasser gelösten Katalysator einfach und schonend von dem in Wasser nicht löslichen Reaktionsprodukt abzutrennen. Nach diesem Prinzip arbeitet z.B. das in der DE 26 27 354 C2 beschriebene Hydroformylierungsverfahren. Als Katalysator gelangt das System Rhodium/Na-Triphenylphosphantrisulfonat zum Einsatz.

Die Annahme, daß die Zusammensetzung des Hydroformylierungsproduktes bei der Verwendung von Rhodiumkomplex-Katalysatoren von der chemischen Eigenart der Liganden abhängt, führt zu der Aufgabe, neue Liganden zu entwickeln. Sie sollen die Möglichkeit eröffnen, den Reaktionsablauf zu variieren, so daß bestimmte Produkte bevorzugt, gegebenenfalls sogar ausschließlich, entstehen. Zudem wird gefordert, daß die Liganden und die von ihnen gebildeten Komplexverbindungen in Wasser löslich sind, um die vorstehend beschriebenen Vorteile der Hydroformylierung in einem Zweiphasensystem zu nutzen.

Die Erfindung stellt solche Liganden bereit. Sie betrifft neue sulfonierte Tris(p-fluorphenyl)phosphane der allgemeinen Formel 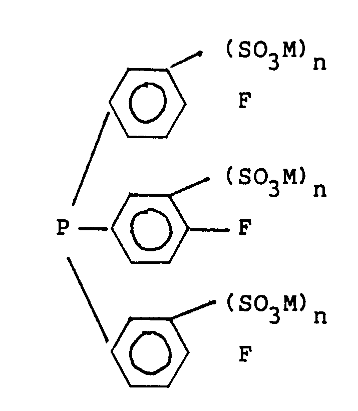
in der M für Wasserstoff, für Ammonium, für ein einwertiges Metall oder das Äquivalent eines mehrwertigen Metalls steht, und n O oder 1 ist mit der Maßgabe, daß mindestens ein n gleich 1 ist.

Zur Herstellung der neuen Verbindungen geht man vom Tris(p-fluorphenyl)phosphan als Grundkörper aus. Diese Verbindung erhält man durch Umsetzung von Phosphortrichlorid mit dem aus p-Fluorbrombenzol bereiteten Grignardreagenz (Schindlbauer, Chem. Ber. 100 (1967), 3432 ff).

Um eine oder mehrere Sulfonsäuregruppen in die durch Fluor substituierten Phenylreste einzuführen, behandelt man das Tris(p-fluorphenyl)phosphan mit überschüssigem Schwefeltrioxid in Form von Oleum als Sulfonierungsmittel.

Es hat sich bewährt, Oleum einzusetzen, das 10 bis 65 und insbesondere 20 bis 30 Gew.-% "freies" Schwefeltrioxid enthält. Das Sulfonierungsmittel ist, bezogen auf die Phenylreste` im Überschuß anzuwenden. Zweckmäßig setzt man je mol Phenylrest 1 bis 100, vorzugsweise 10 bis 30 mol SO₃ ein. In der Praxis legt man das Oleum vor und fügt das Phosphan anteilsweise hinzu, um einen ständigen SO₃-Überschuß sicherzustellen.

Die Sulfonierung wird bei niedrigen Temperaturen, d.h. bei Temperaturen zwischen 0 und 15°C, vorzugsweise bei 5 bis 10°C durchgeführt. Es hat sich bewährt, den Reaktor gut zu kühlen und das Phosphan langsam und in kleinen Anteilen in das Oleum einzutragen, so daß die Reaktionswärme ohne Mühe abgeführt werden kann. Man erreicht dadurch, daß die Sulfonierung nicht unkontrolliert abläuft, sondern in jeden der drei Phenylreste nacheinander, jeweils nur eine -SO₃H-Gruppe eintritt und zwar in meta-Position. Nach Zusatz des gesamten Phosphans kann die Nachreaktion bei Raumtemperatur, d.h. bei etwa 20 bis 25°C und im wesentlichen ohne äußere Kühlung erfolgen. Es ist jedoch zweckmäßig, das Reaktionsgemisch zu rühren, um gegebenenfalls noch auftretende Reaktionswärme gleichmäßig zu verteilen und ohne Verzögerung abführen zu können. Wegen der niedrigen Reaktionstemperatur, insbesondere aber auch wegen des induktiven Effekts der Fluorsubstituenten (-I-Effekt), die die Elektronendichte in der para-Stellung des aromatischen Ringes erniedrigen und dadurch den elektrophilen Angriff des Sulfonierungsmittels erschweren, sind längere Reaktionszeiten nötig. Im allgemeinen erfordert die Umsetzung in den genannten Temperaturbereichen je nach Anzahl der in das Phosphanmolekül eingeführten -SO₃H-Gruppen 40 bis 400 Stunden. Hierbei ergeben kurze Reaktionszeiten bevorzugt monosulfonierte Produkte, während bei Anwendung langer Reaktionszeiten di- und in geringerem Umfang trisulfonierte Phosphane entstehen.

Im Anschluß an die Sulfonierung wird die Reaktionslösung hydrolysiert. Bei diesem Verfahrensschritt ist darauf zu achten, daß eine Temperatur von etwa 30°C nicht überschritten wird, vorteilhaft ist es, Temperaturen im Bereich von 15 bis 25°C einzuhalten. Es empfiehlt sich daher, die Hydrolyse mit Eis oder Eiswasser durchzuführen und für intensive Außenkühlung zu sorgen. Die verdünnte, im wesentlichen das Sulfonierungsprodukt und Schwefelsäure enthaltende Lösung kann auf verschiedene Weise aufgearbeitet werden.

So hat es sich bewährt, die schwefelsaure Lösung mit einer Mischung aus einem in Wasser unlöslichen Amin und einem organischen Lösungsmittel zu extrahieren. Geeignet sind Amine mit 10 bis 60, vorzugsweise 13 bis 36 Kohlenstoffatomen im Molekül, z.B. Methyl-dioctylamin, Tri-n-octylamin, Tri-iso-octylamin, Tri-2(ethylhexyl)amin, Tridodecylamin. Als organisches Lösungsmittel werden mit Erfolg aliphatische und aromatische Kohlenwasserstoffe oder Kohlenwasserstoffgemische, z.B. Toluol oder kerosinähnliche Gemische verwendet.

Je Äquivalent Sulfonsäure setzt man 0,5 bis 1,5 mol, vorzugsweise 0,8 bis 1,2 mol Amin ein. Nach intensivem Mischen der schwefelsauren und der Aminlösung werden wäßrige und organische Phase voneinander getrennt. Die organische Phase, sie enthält das Aminsalz, wird mit der Lösung einer Base in Wasser zur Reaktion gebracht, deren sulfonsaures Salz hergestellt werden soll. Man erhält eine wäßrige Lösung, aus dem das gewünschte Sulfonsäuresalz isoliert werden kann.

Statt die in Wasser gelöste Base auf einmal der Lösung des Aminsalzes im organischen Medium zuzusetzen, kann ihre Zugabe auch in Anteilen erfolgen. Diese Arbeitsweise wird mit Erfolg besonders dann eingesetzt, wenn das Sulfonierungsgemisch, das Produkte verschiedener Sulfonierungsstufen enthält, aufgetrennt werden soll. Die Zahl der Reextraktionsschritte, d.h. der Überführung der als Aminsalz im organischen Medium gelösten Sulfonsäure in die wäßrige Phase durch Behandlung mit der wäßrigen Lösung einer Base, ist der Zusammensetzung des Reaktionsgemisches anzupassen. Im allgemeinen reicht zwei- bis fünfmalige Reextraktion vollständig aus, um die reinen Sulfonsäuren zu erhalten. Zweckmäßig fügt man die in Wasser gelöste Base der organischen Phase solange zu, bis ein bestimmter pH-Wert erreicht ist, trennt dann die Phasen voneinander, setzt die Basenzugabe bis zur Einstellung jeweils höherer pH-Werte fort und arbeitet die wäßrigen Lösungen getrennt auf.

Nach einer anderen Arbeitsweise neutralisiert man die schwefelsaure Lösung mit einem alkalischen Reagenz wie Alkalihydroxid oder Alkalicarbonat, bevorzugt Natriumhydroxid. Um das Volumen des Reaktionsgemisches nicht unnötig zu vergrößern und das sich bildende Alkalisulfat weitgehend abzuscheiden, wendet man das Neutralisationsmittel als hochkonzentrierte Lösung oder in ungelöster fester Form an, z.B. Ätznatron-Schuppen oder -Granalien.

Die Hauptmenge des Alkalisulfats kann man aus der Lösung aufgrund seiner geringeren Löslichkeit bei niederen Temperaturen durch Abkühlen entfernen. Die geeigneten Temperaturen hängen von der Konzentration des Sulfats in der Lösung und dem Temperaturverlauf seiner Löslichkeit ab. Die günstigsten Bedingungen sind daher von Fall zu Fall durch Versuche zu bestimmen. Die Sulfatabtrennung kann in einer oder auch in mehreren Stufen erfolgen, es hat sich als zweckmäßig erwiesen, die Kristallisation in zwei Stufen vorzunehmen.

Nach der Abscheidung des Alkalisulfats engt man die Lösung vorzugsweise im Vakuum einer Ölpumpe zur Trockne ein und extrahiert aus dem Kristallbrei die sulfonierten Fluorphenylphosphane. Geeignete Extraktionsmittel sind z.B. Gemische aus niederen Alkoholen mit Wasser. Man führt die Extraktion nach konventionellen Verfahren in einer oder in mehreren Stufen, vorzugsweise zwei bis vier Stufen durch. Die Extrakte werden vereinigt und zur Trockne eingeengt. Durch Reextraktion, die gegebenenfalls mehrfach durchgeführt werden muß, lassen sich die Gemische in ihre Bestandteile zerlegen.

Als weiteres Verfahren zur Trennung der Sulfonierungsgemische hat sich die Gelchromatographie bewährt (vgl. DE-A-38 22 036). Als stationäre Feststoffphasen werden modifizierte, organische Polymere eingesetzt. Geeignet sind insbesondere mit Epichlorhydrin vernetzte Dextrane (im Handel unter dem Namen Sephadex) und Oligoethylenglykol/Glycidyldimethacrylat/-Pentaerithritoldimethacrylat-Copolymerisate (im Handel unter dem Namen Fractogel). Als Flüssigphase dienen Wasser oder Wasser/Solvens-Gemische, wobei "Solvens" ein mit Wasser mischbares organisches Lösemittel ist, vorzugsweise Methanol und andere niedere Alkohole.

Durch Behandlung der Lösungen der Natriumsalze der sulfonierten Fluorphenylphosphane mit einem Kationaustauscher in der H⁺-Form können aus den Salzen die freien Säuren hergestellt und durch Einengen der wäßrigen Lösungen in Substanz gewonnen werden. Aus den Säuren lassen sich durch Umsetzung mit Hydroxiden, Carbonaten, Ammoniak oder Aminen weitere Salze der neuen sulfonierten Fluorphenylphosphane herstellen.

In Beispiel 1 wird die Herstellung der neuen Verbindungen beschrieben, sie werden durch physikalische Eigenschaftswerte näher charakterisiert.

### Beispiel 1: Sulfonierung von Tris(p-fluorphenyl)phosphan (TFPP)

In einem mit Rührer, Thermometer und Tropftrichter ausgestatteten Schlenkkolben, der vorher evakuiert, ausgeheizt und mit Argon gefüllt worden war, wurden 85,1 g 96 %ige Schwefelsäure und 23,2 g (0,18 mol SO₃) 65 %iges Oleum vorgelegt. Innerhalb von 1,5 Stunden wurden zu der auf 5°C abgekühlten Schwefelsäure und unter Aufrechterhaltung einer Temperatur von 5 bis 10°C 15 g (0,04 mol) TFPP in kleinen Anteilen gegeben und 70,0 g (0,56 mol SO₃) 65 %iges Oleum sehr langsam innerhalb einer Stunde zugetropft. Darauf ließ man bei konstant 24°C reagieren.

Nach 2,5; 18; 48; 116; 142; 164; 185; 311 und 330 Stunden Reaktion wurde jeweils eine Probe entnommen und in Eiswasser hydrolysiert. Anschließend wurde die verdünnte Lösung durch Zusatz gesättigter NaOH-Lösung auf einen pH-Wert von 12 eingestellt und zur Abtrennung nicht umgesetzten TFPP mit Toluol extrahiert. Die Phasen wurden getrennt und durch HPLC analysiert.

Nach 48 Stunden Reaktionszeit konnte in der Toluolschicht TFPP nicht mehr nachgewiesen werden. Die Analyse der wäßrigen Schicht ergab, daß sich 70 Gew.-% des TFPP zu Tris(p-fluorphenyl)phosphanmonosulfonsäure-Natriumsalz und 22 Gew.-% zu Tris(p-fluorphenyl)phosphandisulfonsäure-Dinatriumsalz umgesetzt hatten. Weitere, nach 116 bis 330 Stunden Reaktionszeit entnommene Proben zeigten, daß die Menge des Tris(p-fluorphenyl)phosphandisulfonsäure-Dinatriumsalzes zugenommen und die Menge des Tris(p-fluorphenyl)phosphanmonosulfonsäure-Natriumsalzes entsprechend abgenommen hatte. Nach 116 Stunden Reaktionszeit konnte Tris(p-fluorphenyl)phosphantrisulfonsäure-Trinatriumsalz in Spuren nachgewiesen werden. Nach 410 Stunden Reaktion wurde die Reaktionsmischung mit sauerstofffreiem Wasser hydrolysiert. Durch intensive Außenkühlung wurde die Innentemperatur während der Hydrolyse zwischen 20 und 25°C gehalten. Die HPLC-Analyse ergab für das Reaktionsgemisch folgende Zusammensetzung:
- 6,6 %: Tris(p-fluorphenyl)phosphantrisulfonsäure-Trinatriumsalz (TFPPTS)
- 68,6 %: Tris(p-fluorphenyl)phosphandisulfonsäure-Dinatriumsalz (TFPPDS)
- 11,0 %: Tris(p-fluorphenyl)phosphanmonosulfonsäure-Natriumsalz (TFPPMS)

Zu der Reaktionsmischung wurde eine Lösung von 46 g (130 mmol) Triisooctylamin (TiOA) in 185 g Toluol gegeben. Nach einstündigem Rühren wurde die wäßrige, Schwefelsäure enthaltende Schicht abgetrennt und verworfen. Die Toluolphase wurde mit wäßriger, 5 Gew.-%iger NaOH-Lösung versetzt und auf einen PH-Wert von 4,1 eingestellt. Die wäßrige Schicht wurde abgetrennt, sie enthielt, wie die Analyse ergab, lediglich Na₂SO₄. Zur TiOA/Toluol-Schicht wurde weitere 5 Gew.-%ige NaOH-Lösung bis zum Erreichen eines pH-Wertes von 6,76 gegeben. Die wäßrige Schicht wurde abgetrennt, zur Trockne eingeengt und mit Methanol gewaschen. Das ³¹P-NMR-Spektrum des so erhaltenen Feststoffes zeigte, daß es sich um eine Mischung aus 87 Gew.-% sulfoniertem TFPP und 13 Gew.-% sulfoniertem Tris(p-fluorphenyl)phosphanoxiden handelte. Das Sulfonierungsprodukt des TFPP bestand aus 6 Gew.-% TFPPTS und 94 Gew.-% TFPPDS. Die HPLC-Analysen des isolierten und mit 30 %igem H₂O₂ oxidierten Feststoffes ergaben, daß es sich um eine Mischung aus 84 Gew.-% TFPPDS und TFPPTS und 16 Gew.-% sulfonierten Tris(p-fluorphenyl)phosphanoxiden handelte. Der pH-Wert der TiOA/Toluol-Phase wurde durch erneute Zugabe wäßrige 5 %iger NaOH-Lösung auf 12,71 erhöht, darauf die wäßrige Schicht abgetrennt und zur Trockne eingeengt. Aufgrund des ³¹P-NMR-Spektrums setzt sich der erhaltene Feststoff aus 91 Gew.-% TFPPMS und 9 Gew.-% sulfonierten Tris(p-fluorphenyl)phosphanoxiden zusammen.

Die Na-Salze des mono-, di- und trisulfonierten Tris(p-fluorphenyl)phosphans sind in Waser sehr gut löslich, aber in typischen organischen Lösungsmitteln wie n-Hexan, Toluol, Diethylether und Essigsäureethylester unlöslich.

Beispiel 2 betrifft die Verwendung von TFPPDS (mit einem Anteil von 6 Gew.-% TFPPTS) als Beispiel eines Sulfonierungsproduktes von TFPP zusammen mit Rhodium als Katalysator bei der Hydroformylierung von n-Hexen-1.

### Beispiel 2: Hydroformylierung von n-Hexen-1 in Gegenwart von Rh/TFPPDS

Jeweils 5,37 g (64 mmol) n-Hexen-1 wurden bei 120°C und 5 MPa Druck in einem 0,1 1-Autoklaven mit Magnetrührung mit CO/H₂ (1:1) umgesetzt. Die Umsetzung erfolgte in Gegenwart von 24,7 mg (0,003 mmol)Rh₄(CO)₁₂ entsprechend 0,132 mmol Rh und wechselnden Mengen TFPPDS, nämlich 0,51 g (0,99 mmol), 1,1 g (1,98 mmol), 2,1 g (3,96 mmol) bzw. 4,1 g (7,9 mmol) als Katalysator und 20 ml sauerstofffreiem Wasser als Lösungsmittel . Die Reaktionszeit betrug 2 Stunden. Die Ergebnisse der Umsetzungen sind in Tabelle 1 zusammengestellt.

**Tabelle 1**

| Versuch | P/Rh-Verhältnis | Ausbeute (Gew.-%) | Isomerenverteilung in % | | |
|---|---|---|---|---|---|
| | | | n-Heptanal | 2-Methylhexanal | 2-Ethylpentanal |
| 1 | 7,5 | 11 | 93 | 7 | Spur |
| 2 | 15 | 6 | 94 | 5 | 0,4 |
| 3 | 30 | 4 | 95 | 4 | 0,7 |
| 4 | 60 | 8 | 96 | 4 | 0,3 |

### Beispiel 3 (Vergleich): Hydroformylierung von n-Hexen-1 in Gegenwart von Rh/Triphenylphosphantrisulfonsäure-Trinatriumsalz (TPPTS)

In weiteren Versuchen wurde zum Vergleich n-Hexen-1 unter den Bedingungen des Beispiels 2, jedoch mit Rhodium und TPPTS (in denselben molaren Mengen wie in Beispiel 2) als Katalysator hydroformyliert. Die Ergebnisse der Umsetzungen sind in Tabelle 2 zusammengestellt.

**Tabelle 2**

| Versuch | P/Rh-Verhältnis | Ausbeute (Gew.-%) | Isomerenverteilung in % | | |
|---|---|---|---|---|---|
| | | | n-Heptanal | 2-Methylhexanal | 2-Ethylpentanal |
| 5 | 7,5 | 13 | 86 | 14 | 0,1 |
| 6 | 15 | 16 | 91 | 9 | Spur |
| 7 | 30 | 9 | 95 | 5 | 0,1 |
| 8 | 60 | 11 | 96 | 4 | 0,3 |

Ein Vergleich der Ergebnisse der Beispiele 2 und 3 zeigt, daß überraschenderweise sulfoniertes TFPP als Katalysatorbestandteil bereits in wesentlich geringerer Konzentration als TPPTS die Hydroformylierung von Olefinen zu linearen Aldehyden mit hoher Selektivität ermöglicht und damit einen wirtschaftlich vorteilhaften Weg zur Gewinnung dieser Verbindungen eröffnet.

## Patentansprüche

1. Sulfonierte Tris(p-fluorphenyl)phosphane der allgemeinen Formel 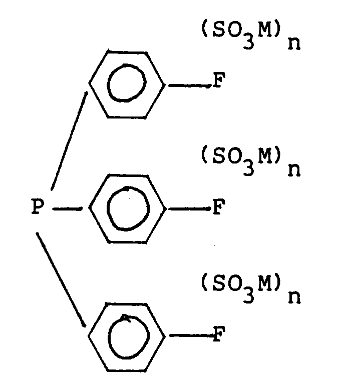 in der M für Wasserstoff, für Ammonium, für ein einwertiges Metall oder das Äquivalent eines mehrwertigen Metalls steht und n 0 oder 1 ist mit der Maßgabe, daß mindestens ein n gleich 1 ist.

2. Sulfonierte Tris(p-fluorphenyl)phosphane, dadurch gekennzeichnet, daß M Alkalimetall oder das Äquivalent eines Erdalkalimetalls ist.

3. Verfahren zur Herstellung von sulfonierten Tris(p-fluorphenyl)phosphanen nach Anspruch 1 oder 2, dadurch gekennzeichnet, daß man Tris(p-fluorphenyl)phosphane unter Rühren bei Temperaturen von 0 bis 15°C in eine Lösung von Schwefeltrioxid in Schwefelsäure einträgt, bei 20 bis 25°C nachreagieren läßt, das Reaktionsgemisch bei Temperaturen, die 30°C nicht übersteigen mit Wasser verdünnt und anschließend aufarbeitet.

4. Verfahren nach Anspruch 3, dadurch gekennzeichnet, daß die Konzentration des in der Schwefelsäure gelösten Schwefeltrioxids 10 bis 65 Gew.-%, insbesondere 20 bis 30 Gew.-% bezogen auf die Lösung beträgt.

5. Verfahren nach Anspruch 3 oder 4, dadurch gekennzeichnet, daß Tris(p-fluorphenyl)phosphan bei Temperaturen von 5 bis 10°C in die Lösung von Schwefeltrioxid in Schwefelsäure eingetragen wird.

6. Verfahren nach einem oder mehreren der Ansprüche 3 bis 5, dadurch gekennzeichnet, daß das Reaktionsgemisch bei Temperaturen von 15 bis 25°C mit Wasser verdünnt wird.

7. Verfahren nach einem oder mehreren der Ansprüche 3 bis 6, dadurch gekennzeichnet, daß man das mit Wasser verdünnte Reaktionsgemisch mit der Lösung eines wasserunlöslichen Amins in einem wasserunlöslichen organischen Lösungsmittel extrahiert, die organische Phase abtrennt, mit der wäßrigen Lösung einer Base zur Reaktion bringt und aus der abgetrennten wäßrigen Phase die sulfonierten Tris(p-fluorphenyl)phosphane als Salze isoliert.

8. Verfahren nach einem oder mehreren der Ansprüche 3 bis 6, dadurch gekennzeichnet, daß man das mit Wasser verdünnte Reaktionsgemisch mit einer wäßrigen Alkalihydroxid- oder Alkalicarbonatlösung neutralisiert, abgeschiedenes Alkalisulfat abfiltriert, die wäßrige Lösung unter schonenden Bedingungen zur Trockne einengt und aus dem Rückstand die sulfonierten Tris(p-fluorphenyl)phosphane als Salze extrahiert.

9. Verfahren nach einem oder mehreren der Ansprüche 3 bis 6, dadurch gekennzeichnet, daß man aus dem mit Wasser verdünnten Reaktionsgemisch die sulfonierten Tris(p-fluorphenyl)phosphane durch Gelchromatographie abtrennt.

## Claims

1. A sulfonated tris(p-fluorophenyl)phosphine of the general formula 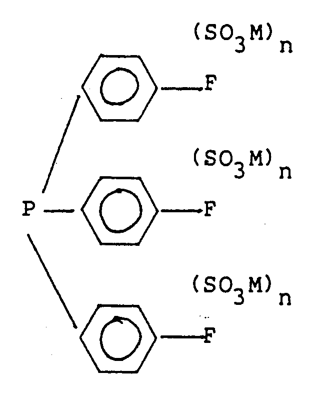 in which M is hydrogen, ammonium, a monovalent metal or the equivalent of a polyvalent metal and n is 0 or 1, with the proviso that at least one n is 1.

2. A sulfonated tris(p-fluorophenyl)phosphine, wherein M is an alkali metal or the equivalent of an alkaline earth metal.

3. A process for the preparation of a sulfonated tris(p-fluorophenyl)phosphine as claimed in claim 1 or 2, wherein a tris(p-fluorophenyl)phosphine is introduced, with stirring, at temperatures of 0 to 15°C into a solution of sulfur trioxide in sulfuric acid and the mixture is allowed to post-react at 20 to 25°C and the reaction mixture is diluted with water at temperatures which do not exceed 30°C and is then worked up.

4. The process as claimed in claim 3, wherein the concentration of the sulfur trioxide dissolved in the sulfuric acid is 10 to 65% by weight, in particular 20 to 30% by weight, based on the solution.

5. The process as claimed in claim 3 or 4, wherein tris(p-fluorophenyl)phosphine is introduced at temperatures of 5 to 10°C into the solution of sulfur trioxide in sulfuric acid.

6. The process as claimed in one or more of claims 3 to 5, wherein the reaction mixture is diluted with water at temperatures of 15 to 25°C.

7. The process as claimed in one or more of claims 3 to 6, wherein the reaction mixture diluted with water is extracted with the solution of a water-insoluble amine in a water-insoluble organic solvent, the organic phase is separated off and reacted with the aqueous solution of a base and the sulfonated tris(p-fluorophenyl)phosphines are isolated in the form of salts from the aqueous phase separated off.

8. The process as claimed in one or more of claims 3 to 6, wherein the reaction mixture diluted with water is neutralized with an aqueous alkali metal hydroxide solution or alkali metal carbonate solution, precipitated alkali metal sulfate is filtered off, the aqueous solution is concentrated to dryness under gentle conditions and the sulfonated tris(p-fluorophenyl)phosphines are extracted in the form of salts from the residue.

9. The process as claimed in one or more of claims 3 to 6, wherein the sulfonated tris(p-fluorophenyl)phosphines are separated off from the reaction mixture diluted with water by means of gel chromatography.

## Revendications

1. Tris(p-fluorophényl)phosphanes sulfonés de formule générale 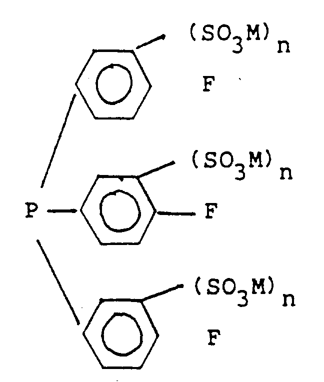 dans laquelle M représente l'hydrogène, le groupe ammonium, un métal monovalent ou un équivalent d'un métal polyvalent et n est égal à 0 ou 1, sous réserve que l'un au moins des indices n est égal à 1.

2. Tris(p-fluorophényl)phosphanes sulfonés, caractérisés en ce que M représente un métal alcalin ou un équivalent d'un métal alcalino-terreux.

3. Procédé de préparation des tris(p-fluorophényl)phosphanes sulfonés selon la revendication 1 ou 2, caractérisé en ce que l'on introduit les tris(p-fluorophényl)phosphanes sous agitation, à des températures de 0 à 15°C, dans une solution de trioxyde de soufre dans l'acide sulfurique, on laisse réagir à des températures de 20 à 25°C, on dilue le mélange de réaction par l'eau à des températures ne dépassant pas 30°C puis on procède aux opérations d'isolement.

4. Procédé selon la revendication 3, caractérisé en ce que la concentration du trioxyde de soufre en solution dans l'acide sulfurique est de 10 à 65 % en poids, plus spécialement de 20 à 30 % en poids, par rapport à la solution.

5. Procédé selon la revendication 3 ou 4, caractérisé en ce que l'on introduit le tris(p-fluorophényl)phosphane à des températures de 5 à 10°C dans la solution de trioxyde de soufre dans l'acide sulfurique.

6. Procédé selon une ou plusieurs des revendications 3 à 5, caractérisé en ce que l'on dilue le mélange de réaction par l'eau à des températures de 15 à 25°C.

7. Procédé selon une ou plusieurs des revendications 3 à 6, caractérisé en ce que l'on extrait le mélange de réaction dilué par l'eau par la solution d'une amine insoluble dans l'eau dans un solvant organique insoluble dans l'eau, on sépare la phase organique, on la fait réagir avec la solution aqueuse d'une base, et à partir de la phase aqueuse séparée, on isole les tris(p-fluorophényl)phosphanes sulfonés à l'état de sels.

8. Procédé selon une ou plusieurs des revendications 3 à 6, caractérisé en ce que l'on neutralise le mélange de réaction dilué par l'eau par une solution aqueuse d'hydroxyde alcalin ou de carbonate alcalin, on filtre le sulfate alcalin qui a précipité, on concentre la solution aqueuse à sec dans des conditions ménagées et à partir du résidu on extrait les tris(p-fluorophényl)phosphanes sulfonés à l'état de sels.

9. Procédé selon une ou plusieurs des revendications 3 à 6, caractérisé en ce que l'on sépare les tris(p-fluorophényl)phosphanes sulfonés du mélange de réaction dilué par l'eau, par chromatographie sur gel.
